# FASCICULE DE BREVET EUROPEEN

(11) **EP 0 792 553 B1**
(45) Date de publication et mention de la délivrance du brevet: **15.12.1999**
(21) Numéro de dépôt: 95939331.5
(22) Date de dépôt: 07.11.1995
(51) Int. Cl.: H04N 1/42, H04N 1/32

(54) **PROCEDE DE CERTIFICATION DE LA REPRODUCTION D'UN DOCUMENT, NOTAMMENT D'UNE TELECOPIE**
VERFAHREN ZUR BEGLAUBIGUNG EINER KOPIE EINES DOKUMENTES, INSBESONDERE EINES TELEFAXES
METHOD FOR CERTIFYING A COPY OF A DOCUMENT SUCH AS A FAX

(30) Priorité: 14.11.1994 FR 9413617
(43) Date de publication de la demande: 03.09.1997
(73) Titulaire: GEMPLUS, 13420 Gemenos (FR)
(72) Inventeur: SARAT, Jean-Marc, F-83860 Nans-les-Pins (FR); BOUTILLIER, Jean-Yves, F-13830 Roquefort-la-Bedoule (FR)
(74) Mandataire: Schmit, Christian Norbert Marie
(86) Numéro de dépôt international: FR9501459
(87) Numéro de publication internationale: WO9615621

(56) Documents cités:
- EP-A- 0 532 381
- EP-A- 0 561 700
- EP-A- 0 639 919
- FR-A- 2 660 135
- US-A- 4 064 389

## Description

La présente invention se rapporte aux procédés qui permettent de certifier les reproductions de documents afin de pouvoir confirmer que ces reproductions sont bien conformes à l'original. Elle s'applique plus particulièrement aux télécopies, mais elle s'étend à tout espèce de document, par exemple les photocopies ou les chèques.

Dans le cas particulier des télécopies, le demandeur a déposé le 12 septembre 1991 une demande de brevet sous le numéro 91 11275, correspondant à la publication EP-A- 0 532 381, portant sur un procédé dans lequel on inscrit dans un cartouche en tête du document à télécopier certains éléments caractéristiques du document à transmettre par télécopie. Un dispositif certificateur permet de décoder le contenu de ce cartouche, de le chiffrer et de confectionner un sceau alpha-numérique qui est transmis sur la ligne du télécopieur avec le code standard des signaux de télécopie. A la réception, le sceau apparaît en bas du document, alors que le cartouche apparaît toujours en haut du document. Pour authentifier ce sceau, le récepteur peut par exemple s'adresser par exemple à un centre serveur qui pratique une même opération de codage sur le contenu du cartouche et compare le résultat ainsi obtenu avec le sceau transmis, afin d'authentifier le document.

Dans la pratique, ce procédé présente l'inconvénient d'être très sensible aux différents défauts de transmission, de numérisation et d'impression, par exemple le bruit ou encore les défauts d'alignement du cartouche et du sceau. En présence de pareils défauts, très rapidement le deuxième sceau obtenu lors des opérations de vérification diffère sensiblement de celui obtenu à l'origine, et le document est considéré comme faux alors qu'il est authentique.

Pour pallier ces inconvénients, l'invention propose un procédé de certification de la reproduction d'un document original, notamment d'une télécopie, dans lequel on analyse le document original ligne par ligne sous forme d'une trame, on élabore un sceau de certification destiné à être imprimé dans un espace libre en bas de ladite reproduction, puis on reproduit le document par impression de la trame analysée dans laquelle a été inséré ledit sceau, caractérisé en ce que ce sceau comprend au moins la transcription comprimée, et codée sous forme de codes-barres, du contenu d'une zone à certifier du document original.

Selon une autre caractéristique, pour obtenir cette transcription, on applique au signal obtenu lors de l'analyse de la zone déterminée un masque réducteur de résolution et on comprime à l'aide d'un algorithme de compression de données le signal provenant de cette réduction.

Selon une autre caractéristique, pour imprimer le sceau, on code le signal provenant de cette compression dans un ensemble de codes-barres qui est imprimé dans l'espace réservé au sceau selon un ensemble de lignes de codes-barres.

Selon une autre caractéristique, chaque ligne de codes-barres est imprimée n fois, sur une hauteur de n lignes d'analyse, pour permettre une lecture non ambiguë de ces codes-barres dans des limites de distorsions de l'analyse.

Selon une autre caractéristique, chaque ligne de codes-barres est terminée par une somme-pour-contrôle horizontale, et une dernière hauteur de lignes est formée de codes-barres constituant chacun une somme-pour-contrôle verticale.

Selon une autre caractéristique, les codes-barres sont en outre imprimés sur m blocs de codes-barres distincts, séparés et alignés dans le sens du balayage pour augmenter la tolérance aux distorsions de l'analyse.

Selon une autre caractéristique, on applique en outre au signal provenant de la compression un algorithme de condensation qui détermine un signal numérique condensé, lequel est rajouté au signal provenant de la compression et permet de contrôler l'intégrité de celui-ci.

Selon une autre caractéristique, on rajoute en outre au signal provenant de la compression un signal représentant des données d'identification.

Selon une autre caractéristique, ces données d'identification comprennent au moins la signature de l'émetteur, l'identification du récepteur, la date et l'heure de reproduction.

Selon une autre caractéristique, au moins les données d'identification sont chiffrées et on rajoute en outre au signal la clé nécessaire au déchiffrement.

Selon une autre caractéristique, la totalité du signal représentant le sceau est codée graphiquement et éventuellement chiffrée.

Selon une autre caractéristique, n = m = 4.

Selon une autre caractéristique, pour certifier le document, on rétabli à partir du sceau l'image de ladite zone déterminée et on compare cette image et cette zone.

Selon une autre caractéristique, cette comparaison est visuelle.

Selon une autre caractéristique, cette comparaison est automatique et on effectue une réémission vers l'émetteur d'un signal de certification, ou de rejet de certification, selon les résultats de la comparaison.

Selon une autre caractéristique, on obtient le chiffrement à partir d'un algorithme contenu dans une carte à puce.

D'autres particularités et avantages de l'invention apparaîtront clairement dans la description suivante présentée à titre d'exemple non limitatif en regard des figures annexés qui représentent :
- La figure 1, un formulaire destiné à rédiger le document à transmettre;
- La figure 2, le cadre généré pour entourer la zone à certifier;
- La figure 3, le cadre généré pour entourer le sceau qui sera lui-même généré;
- La figure 4, le détail de la disposition des trames représentant le sceau dans le cadre défini sur la figure 3; et
- La figure 5, une représentation simplifiée d'une ligne de codes-barres contenue dans l'une des trames de la figure 4.

Pour préparer un document à certifier selon l'invention, il est nécessaire que la personne qui rédige le document exécute cette rédaction en respectant un certain nombre de règles qui permettent le fonctionnement des appareils utilisés ensuite pour traiter le document à certifier. Ces règles peuvent bien entendu être différentes quant aux valeurs numériques utilisées, en fonction des normes qui seront définitivement retenues pour le système de certification, mais à l'intérieur d'un même système elles sont bien entendu contraignantes. Les valeurs numériques qui vont donc être données pour les règles ainsi définies ne le sont donc qu'à titre d'exemple et elles pourront différer selon les normes finalement retenus pour le ou les systèmes qui seront en définitive mis en oeuvre, sans cependant sortir du cadre de l'invention.

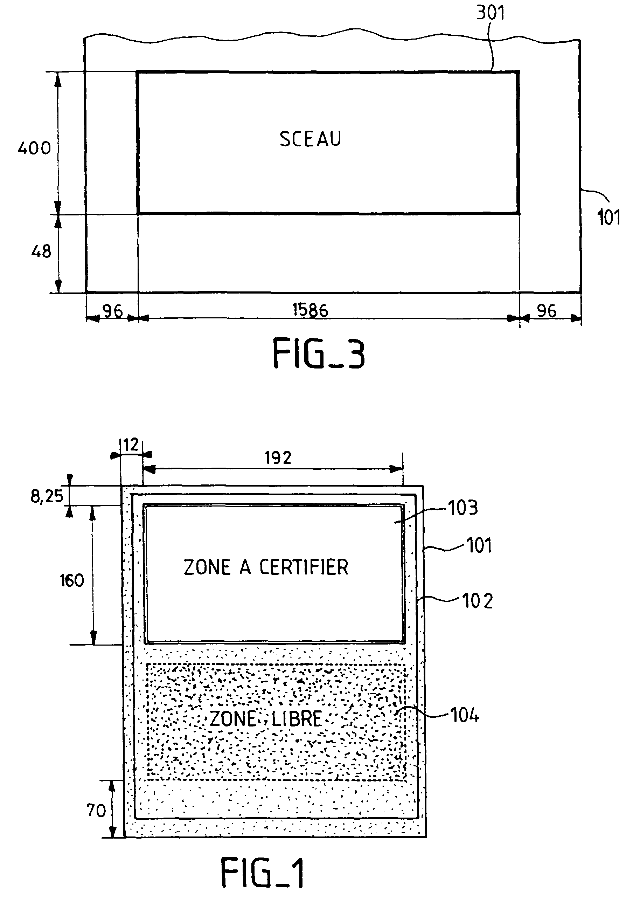

Dans le cas d'une télécopie on utilise en principe des feuilles de dimension A4, correspondant au rectangle 101 représenté sur la figure 1. A l'intérieur de ce rectangle il est prévu un rectangle plus petit 102 dont la reproduction à la réception de la télécopie est garantie par les normes en vigueur, en particulier par celles de l'UIT. Ceci permet de compenser différents défauts, en particulier ceux résultant d'un passage en biais dans l'analyseur de l'appareil d'émission.

L'invention propose d'utiliser pour rédiger le document à émettre un formulaire comprenant à l'intérieur de ce rectangle 102 un premier cadre 103 correspondant à la zone à certifier, et un deuxième cadre 104 correspondant à une zone libre pouvant comporter toutes les indications voulues mais dont le contenu ne sera pas certifié. La zone certifiée sera par exemple un rectangle de largeur 192 mm sur 160 mm de haut (1536 points x 1280 lignes) situé à 8,25 mm (58 lignes) en dessous du bord supérieur de la feuille 101 et à 12 mm (96 points) de chaque bord gauche et droit de cette feuille. La zone libre 104 pourra être de dimensions relativement imprécises, à condition de laisser une marge de quelques millimètres de libre en-dessous du bas inférieur de la zone à certifier, et une hauteur d'environ 70 mm au-dessus du bord inférieur de la feuille 101. Cet espace de hauteur 70 mm en bas de la feuille est destiné à recevoir le sceau qui sera composé par le dispositif de certification selon l'invention.

Compte-tenu des caractéristiques qui seront décrites ci-après pour le système de génération de sceau, en particulier de la compression d'information utilisée, il est souhaitable que les inscriptions portées dans la zone à certifier respectent des dimensions minimales, supérieures à celles en principe prévues par les normes habituelles de la télécopie. Ainsi, alors que l'analyse télécopie est faite par balayage à raison de 8 lignes par millimètre en hauteur avec une résolution de 8 points par millimètre en largeur, ce qui permettrait en principe d'obtenir des traits larges d'un huitième de millimètre et séparés d'un huitième de millimètre, les traits tracés dans la zone à certifier ne devraient être inférieurs à 0,5 mm, soit 4 points et devraient être séparés d'au moins 0,5 mm, soit 4 points également. En outre, pour respecter cette condition, il serait souhaitable d'utiliser par exemple comme police de caractère dactylographique le Times Roman 12.

Bien entendu, l'intérieur de la zone à certifier, en dehors des inscriptions, devrait être un fond uni, de préférence blanc, et surtout ne comportant aucune trame.

Le rédacteur du document rédige donc celui-ci sur le formulaire dans les zones ainsi déterminées en suivant les règles ainsi définies. Bien entendu les inscriptions à l'intérieur de la zone libre peuvent être de dimensions quelconques et peuvent comporter toutes les trames souhaitées.

Le rédacteur introduit ensuite son document dans la machine d'émission, que nous appellerons pour simplifier par l'appellation CERTIFAX. Ce CERTIFAX comprend essentiellement un appareil de photocopie ordinaire et des dispositifs électroniques permettant de traiter les signaux de lecture obtenus lors de l'analyse du document à transmettre. Ces dispositifs permettent de générer des signaux additionnés à ces signaux de lecture afin d'obtenir à la réception des inscriptions surajoutées au document d'origine. Ces inscriptions comporteront essentiellement un cadre déterminant la zone certifiée et le cartouche de certification situé en-dessous de la zone libre.

Le document ainsi transmis pourra être reçu par un télécopieur ordinaire, le destinataire devant alors utiliser d'autres moyens pour vérifier la certification, par exemple l'expédition à un centre serveur ad hoc, ou l'utilisation d'une machine de lecture particulière. La solution la plus simple, et qui devrait tendre à se généraliser au fur et à mesure de la diffusion de l'invention, est d'utiliser le CERTIFAX lui-même. Celui-ci comprend alors d'autres dispositifs électroniques permettant d'analyser la zone certifiée et le cartouche et de déterminer si la certification est correcte.

La réalisation de ces différents circuits de certification est tout à fait à la portée de l'homme de l'art qui utilisera par exemple un ou plusieurs processeurs convenablement programmés pour mettre en oeuvre les opérations logiques correspondant à la mise en oeuvre telle que décrite dans la présente demande de brevet.

A l'émission, le CERTIFAX détermine la position de la zone à certifier à partir du passage du document devant la tête d'analyse. Il rajoute sur les signaux de télécopie des signaux permettant de définir un cadre qui sera reproduit sur la télécopie reçue et qui délimitera la zone ainsi définie.

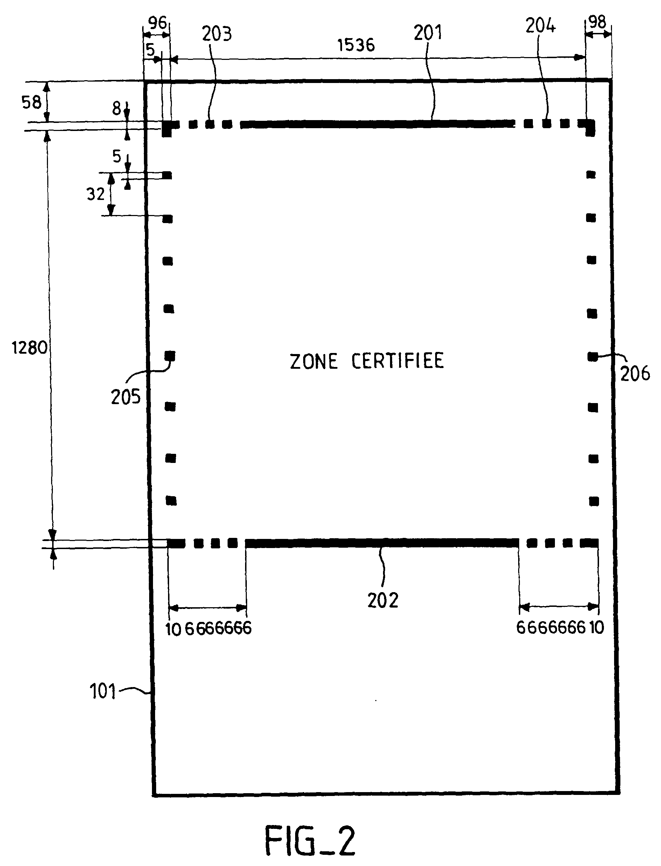

Un simple trait continu serait suffisant pour l'opérateur humain, mais délicat à interpréter par la machine. L'invention propose donc que le cadre soit déterminé de la manière représentée sur la figure 2. Les deux bords, supérieur 201 et inférieur 202, du cadre sont constitués d'une barre noire épaisse de 8 lignes et terminée à ses extrémités par deux codes-barres 203 et 204 formés par exemple à gauche par un trait noir large de 10 points suivi de 7 traits alternativement blancs et noirs larges de 6 points. Les dimensions sur cette figure 2 sont exprimées horizontalement en points d'analyse et verticalement en lignes d'analyse. Le code-barre à droite des bords horizontaux supérieurs et inférieurs est symétrique de celui à gauche.

Les côtés 205 et 206 du cadre quant à eux sont délimités par des petits carrés de 5 points x 5 lignes espacés de 32 lignes. On n'en a représenté que 8 sur la figure, mais il y en a un nombre suffisant pour obtenir la hauteur de 1280 lignes fixée pour la zone certifiée. Outre les repérages des bords de cette zone, ces carrés permettent de découper la zone à certifier en petites surfaces, utiles pour permettre la superposition du masque et de l'image (qui seront explicités plus loin dans ce texte).

Le CERTIFAX émetteur transmet donc de manière normale le document en commençant par le haut et en rajoutant le cadre correspondant à la zone certifiée. Compte-tenu de sa simplicité, la génération de ce cadre peut se faire en temps réel pendant l'émission du document.

La transmission se continue ensuite par l'émission des signaux correspondant à la zone libre. Pendant ce temps, les circuits spécialisés du CERTIFAX déterminent le contenu du sceau à partir du contenu de la zone certifiée et de quelques caractéristiques numériques d'identification du document. Ils déterminent également le codage de ce sceau et génèrent les signaux d'émission aux normes télécopie. Le volume de calcul étant ici nettement plus important que pour déterminer le cadre de la zone certifiée, cette génération s'effectue pendant la transmission de la zone libre. Si celle-ci contient trop de blancs, on ralenti l'émission en utilisant les signaux ad-hoc de contrôle du télécopieur.

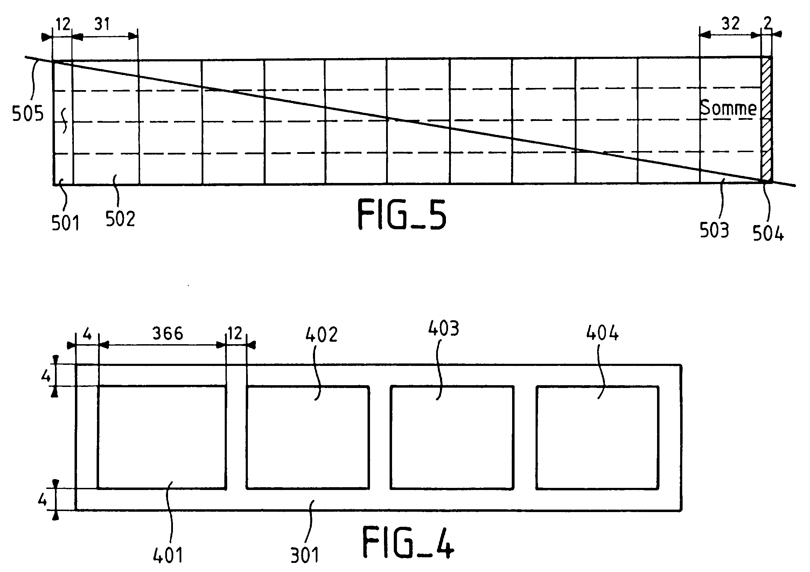

Le sceau est contenu à l'intérieur d'un rectangle tel que défini sur la figure 3 selon les mêmes conventions que sur la figure 2. Ce rectangle est formé par exemple d'un cadre continu d'épaisseur 4 points; sa largeur est de 1536 points et sa hauteur 400 lignes. Son bord inférieur est situé à au moins 48 lignes du bas inférieur du document.

Pour pouvoir intégrer le contenu de la zone certifiée dans le cadre du sceau, il faut pouvoir comprimer ce contenu. Les systèmes de compression d'image actuellement connus ne permettraient généralement pas une compression directe. En attendant de disposer de systèmes de compression plus performants, l'invention propose d'appliquer dans un premier temps un masque sur la zone certifiée, de manière à réduire la résolution d'analyse de cette zone. Ce masque provoquera donc par exemple une chute de résolution d'un facteur 3 en horizontal et d'un facteur 5 en vertical. C'est pour cette raison que l'on a déterminé plus haut des règles d'écriture à l'intérieur de la zone à certifier.

Le masque ainsi défini est donc appliqué de manière connue aux signaux provenant de l'analyse de la zone à certifier

Le résultat de ce traitement est ensuite comprimé en utilisant un algorithme de codage arithmétique, dont on connaît actuellement de nombreux exemples, comme le système JPEG par exemple.

Pour permettre de contrôler l'intégrité du sceau, on utilise différents moyens, ensemble ou séparément. Le premier de ces moyens consiste à opérer une condensation du masque compressé obtenu de la manière vue précédemment, de manière à obtenir un résumé codé du sceau. Cette condensation s'effectue par exemple avec l'algorithme de hachage du type MD5. On applique celui-ci au masque compressé auquel on a rajouté des zéros pour que sa longueur soit un multiple du nombre d'octets par ligne du sceau.

On constitue ensuite le sceau en rajoutant en tète avant le masque compressé un certain nombre d'éléments binaires d'identification. Ceux-ci peuvent être par exemple :
- l'identificateur de l'émetteur codé sur 128 bits. Ce peut être le numéro de téléphone ou un identifiant ou une clé délivrée par la carte de l'émetteur;
- le numéro de téléphone du destinataire codé sur 128 bits;
- la date et l'heure d'émission codées sur 32 bits;
- le masque condensé par un algorithme de hachage tel le MD5, codé sur 128 bits;
- la signature codée sur 128 bits. Cette signature est calculée par une carte à puce de l'émetteur à partir des codes:
- identifiant;
- numéro du destinataire;
- date et heure;
- et condensé.

La meilleure méthode utilisable actuellement pour produire cette signature consiste à utiliser un algorithme à clé secrète ou publique. Celui-ci sera mis en oeuvre de préférence à l'aide d'une carte à puce personnelle à l'utilisateur. Le CERTIFAX sera ainsi un appareil standard qui sera personnalisé pour chaque utilisateur par insertion dans un lecteur de carte de la carte à puce personnelle de l'utilisateur, de la même manière qu'actuellement on personnalise les téléphone sans fil GSM avec une carte à puce;
- Le masque de la zone certifiée. Cet élément peut être chiffré ou non.

Le contenu du sceau étant ainsi obtenu sous une forme numérique, il convient maintenant de le transcoder de façon à obtenir une image graphique qui sera transmise elle-même par le code de télécopie, ou de chemin en général, et qui sera finalement restituée dans la zone du sceau sur la télécopie reçue.

L'invention propose pour cela d'utiliser pour former cette image graphique des codes-barres. Ces codes-barres pourront ensuite être lus à tout instant pour pouvoir être décodés et reconstituer aussi bien les informations numériques que le masque de la zone certifiée. Cette lecture pourra se faire par exemple dans un appareil de type CERTIFAX puisque l'analyse du type télécopie consiste en un balayage selon une trame formée de lignes, qui est particulièrement adaptée à la lecture d'un code-barre.

La structure du code barre a été définie en fonction des caractéristiques des défauts d'impression, de numérisation et de transmission des télécopieurs.

Ce code est caractérisé par:
- la largeur de ses éléments de base (2, 6, 10 pixels),
- le nombre d'éléments (4 blancs, 4 noirs),
- leur hauteur (4 lignes),
- leurs arrangements (> 256 possibilités).

L'utilisation d'un code-barre pour former le sceau est particulièrement utile parce que celui-ci présente parmi de nombreux avantages un effet de redondance dans l'information. En effet, par définition celle-ci existe sur toute la hauteur des barres définissant le code, ce qui autorise une tolérance relativement importante au positionnement de la feuille de papier lors de la lecture, et une facilité d'impression importante.

L'utilisation de codes-barres permet ainsi d'auto-corriger une grande partie des déformations causées par la numérisation sur les éléments noirs et sur les éléments blancs, et ces avantages sont encore multipliées par la disposition particulière des codes-barres dans le sceau qui va être expliquée ci-après.

Comme il existe différents codes-barres, on choisira de préférence un code particulièrement résistant aux distorsions apportées par les télécopieurs. On sait que ces distorsions peuvent éventuellement faire varier la longueur des espaces blancs et des espaces noirs à cause d'un phénomène dû à des défauts d'impression au niveau des transitions blanc/noir. Le plus simple est d'utiliser le code connu sous le numéro 39 qui permet de coder 44 caractères avec une structure 3 parmi 9. Dans ce code chaque caractère est représenté par 9 éléments, 5 barres et 4 espaces, parmi lesquels 3 sont larges et 6 sont étroits. Pour l'application à l'invention, on choisit 16 valeurs de ce code pour pouvoir coder des groupes de 4 bits. L'information est alors codée en hexadécimal avec ces groupes de 4 bits, puis chaque caractère du code est imprimé sur une hauteur suffisante avec pour chaque barre ou espace une hauteur suffisante pour que l'identification reste possible après la numérisation, compte-tenu des erreurs d'impression et de lecture possibles. Cette impression est provoquée par la répétition de l'émission de chaque code barre. Par exemple, pour des codes barres reçus de hauteur de quatre pixels, il y a quatre émissions correspondantes d'un même code carre.

Bien que le code 39 convienne, il est tout à fait possible d'utiliser un autre code que l'on choisira de rendre à la fois plus dense et plus tolérant aux déformations.

Compte-tenu des différentes déformations possibles apportées aux différents stades de la formation et même de la conservation de la feuille de télécopie reçue, il convient d'utiliser plusieurs méthodes de protection de l'information contenue dans le sceau.

La première de ces précautions consiste à répartir sur 4 trames toute l'information du sceau, de la manière représentée sur la figure 4.

Ainsi à l'intérieur de la zone 301 réservée au sceau, on dispose de 4 trames 401 à 404 séparées, mais qui peuvent être déformées pour les raisons évoquées plus haut. Pour pouvoir bien identifier les trames, celles-ci sont situées avec une marge égale à 4 lignes par rapport aux bords haut et bas de la zone réservée au sceau et à 4 points par rapport aux bords gauche et droite de cette zone. Les trames seront espacées de 12 points entre elles.

A l'intérieur de chaque trame, on dispose d'une série de lignes de codes-barres formée chacune d'une succession de barres verticales noires et blanches dont les largeurs déterminent les octets représentant le sceau. Ces barres sont plus hautes que larges, par définition même d'un code-barre, et ont l'aspect, quand on les regarde d'assez près compte-tenu de la résolution du système, des codes-barres universellement répandus et bien connus de tout le monde.

Il faut bien entendu trouver un compromis sur la hauteur de ces barres qui doit être suffisamment grande pour permettre une lecture en biais sans ambiguïté et suffisamment petite pour pouvoir placer dans l'ensemble des trames le contenu des informations du sceau.

Dans chaque trame, par exemple, une ligne de codes-barres est constituée, comme représenté sur la figure 5 (où pour des raisons de clarté, on n'a pas figuré les barres elles-mêmes mais des zones où elles sont contenues) d'un code de synchronisation 501 large de 12 points et permettant de synchroniser le début de la lecture, de 10 octets tels que 502 larges chacun de 32 points, d'un dernier octet 503 large de 32 points et obtenu par la somme-pour-contrôle des 10 octets précédents et enfin une barre noire 504 large de 2 points qui termine la ligne de codes-barres. La longueur de cette ligne de codes-barres, donc la longueur de la trame, est donc égale à 366 points.

Compte-tenu de cette longueur et pour éviter les problèmes de lecture en biais dans la plupart des télécopieurs courants, on a déterminé qu'une hauteur des barres, donc une hauteur de la ligne de codes-barres, égale à 4 lignes d'analyse télécopie était suffisante. Une telle ligne de code barres est donc représentée sur la figure 5 qui comporte quatre lignes de code-points.

Ainsi une lecture selon un biais maximal, correspondant au trait 505 sur la figure 5, qui démarre au coin supérieur gauche de la ligne de codes-barres et qui se termine au coin inférieur droit de cette ligne, permet une reconstitution complète des codes-barres contenus dans la ligne sans risques d'interférences avec une ligne de codes-barres inférieure. Bien entendu, on a ainsi une lecture en échelon des différentes barres, mais on connaît les moyens de compenser cet effet, puisque c'est là l'avantage principal des codes-barres et qu'il est exploité partout où l'on effectue une telle lecture.

Lors d'une lecture avec le biais maximal, on lira ainsi sur la première trame 401 la première ligne de code barre, sur la deuxième trame 402 la deuxième ligne de code barre etc... et sur la quatrième trame 404 la quatrième ligne de code barre. Pour pouvoir remettre dans l'ordre les informations ainsi lues, on partira de la constatation qu'à la lecture de la première ligne de code, les trois autres ne sont pas lues. Selon le sens du biais, la première ligne de codes-barres lue sera donc soit la première ligne de la première trame 401, soit la première ligne de la dernière trame 404. La différence se fera en fonction de la structure décrite ci-après de ces premières lignes. Compte-tenu de ce que l'on sait alors de la première ou de la dernière trame lue, il est aisé de remettre les informations dans le bon sens dans la mémoire de stockage du système à l'aide d'un simple algorithme de recombinaison

En parlant alors de lignes de codes-barres et en considérant ensemble les quatres lignes de même rang des quatre trames, l'invention propose à titre d'exemple de disposer les informations de la manière suivante :
- dans la première ligne 16 octets pour l'identificateur, 16 octets pour le numéro du destinataire, 4 octets pour la date et l'heure et 4 octets à zéro. Ces 4 octets à zéro permettront justement de déterminer quelle trame est lue la première.
- dans la deuxième ligne 16 octets pour le masque condensé à l'aide de l'algorithme de hachage, 16 octets pour la clé de l'algorithme de signature, et 8 octets à zéro. Ces 8 derniers octets permettront de compléter l'information obtenue avec les 4 octets à zéro dans la première ligne.
- Dans les lignes suivantes jusqu'à l'avant dernière les octets correspondant au masque compressé de la zone à certifiée, complété dans l'avant dernière ligne par des zéros de remplissage.
- les octets de la dernière ligne seront les sommes-pour-contrôle des différents octets situés au même niveau sur les lignes précédentes.

On disposera ainsi de deux clés orthogonales sur l'ensemble du contenu du sceau permettant en principe de localiser chaque octet défectueux.

A la fin de la réception on dispose donc en sortie du télécopieur-récepteur d'une feuille comportant une zone certifiée délimitée par le cadre défini plus haut, une zone libre comportant un texte quelconque et qui ne sera pas utilisée pour l'invention, et en bas de la page un sceau de certification comportant à l'intérieur du cadre lui-même défini plus haut, quatre trames remplies de codes-barres. Chaque trame peut contenir plusieurs lignes de codes barres.

Le décodage du sceau permet alors à tout moment de certifier, de manière éventuellement répétitive, le contenu de la zone certifiée ainsi que les indications numériques d'émetteur, de récepteur, de date et d'heure. Cette opération peut se faire soit par lecture du document dans un CERTIFAX, soit par transmission par télécopie simple de ce document à un centre certificateur, soit même à l'intérieur du CERTIFAX récepteur pendant la réception elle-même, ce qui permet alors à ce CERTIFAX récepteur de transmettre au CERTIFAX émetteur un accusé de réception comprenant la certification du document reçu.

Bien que l'on puisse utiliser des appareils tout particulièrement destinés à cet usage, la lecture du sceau se fera généralement de la manière la plus simple avec un analyseur de télécopieur standard, qui procède par balayage selon une trame couvrant toute la feuille.

Comme on l'a montré plus haut, il est alors facile de déterminer dans le signal obtenu lors de la lecture du sceau le premier code-barre de la première trame et d'obtenir ainsi, après une remise en ordre éventuelle pour correction de lecture en biais, un signal numérique représentant le contenu du sceau pris dans le bon ordre. Ce signal numérique est de préférence mémorisé pour pouvoir être traité, ce qui ne présente aucune difficulté avec les mémoires actuelles.

Le traitement consiste tout d'abord à vérifier l'intégrité des données reçues à partir des sommes-pour-contrôle horizontales et verticales, ce qui permet d'identifier les octets éventuellement altérés par la transmission et de les marquer pour pouvoir en tenir compte dans le traitement ultérieur, s'ils ne sont pas trop nombreux et s'ils ne portent pas sur des données indispensables au traitement. Dans le cas contraire le document sera considéré comme non certifié, et il est probable que le plus souvent cette situation se traduira à l'intérieur même de la zone certifiée ou de la zone libre par des défauts visibles à l'oeil et correspondant aux mêmes erreurs de transmission que ceux qui ont affecté le sceau.

Si le traitement peut se poursuivre, on peut calculer un condensé du masque compressé du message reçu en clair, grâce à un algorithme de hachage identique à celui de l'émetteur. Une comparaison des condensés émis et calculés donne un premier niveau de contrôle de l'intégrité du masque compressé.

Une signature est alors calculée à partir des éléments codés extraits du sceau (identificateur, numéro destinataire, date et heure, condensé du masque compressé). Ce calcul se fait grâce à une carte à puce semblable à celle qui a servi à la production de la signature du document émis. La comparaison des signatures (transmise et régénérée) permet de s'assurer de l'intégrité et de l'origine du sceau.

Il ne reste plus alors qu'à décompresser le masque compressé, puis à régénérer la zone certifiée en procédant à une extension des éléments à leur taille initiale de 3 X 5 par agrandissement des éléments de 1 X 1. Le résultat de ce traitement peut alors être imprimé par tout moyen, mais généralement tout simplement à l'aide du système d'impression de télécopie du CERTIFAX, lequel permettra d'imprimer en même temps les éléments d'identification décodés plus haut.

Avec cette méthode, la certification finale se fait par comparaison à l'oeil entre la zone à certifier et l'image restituée à partir du traitement du sceau. Cette méthode peut paraître rudimentaire, mais l'expérience montre qu'elle est très pratique pour apprécier si les différences qui apparaissent entre la zone à certifier et l'image de certification peuvent être attribuées à des simples erreurs de transmission ou de traitement, qui apparaissent de manière tout à fait courante comme on peut le voir tous les jours dans les télécopies ordinaires, ou à des tentatives de falsification. En outre, ce système permettra dans une procédure contentieuse de fournir un document sur papier, plus probant aux yeux des parties et des juges que la simple indication d'une machine.

Il sera pourtant intéressant de procéder à un contrôle automatique lorsque les traitements décrits ci-dessus seront effectués directement sur le signal de réception du sceau. En effet, à ce moment là le CERTIFAX récepteur pourra renvoyer au CERTIFAX émetteur un accusé de réception comportant en outre des indications sur la validité du sceau ainsi que sur des différences éventuelles entre la zone à certifier et l'image de certification reconstituée à partir du sceau. Pour cela, on mémorisera tout d'abord la zone à certifier, qui sera repérée par son cadre, et on procédera à une comparaison avec l'image de certification, en formant par exemple un OU-exclusif. Le masque étendu est découpé en éléments de base de n*n pixels (par exemple: 32*32). La zone certifiée est subdivisée en éléments de base dont les coordonnées sont calculées grâce aux repères constituants le cadre de la zone certifiée.

Une série d'opérations OU exclusif sont effectuées entre chaque élément du masque et plusieurs éléments de la zone certifiée dont les coordonnées évoluent autour des coordonnées idéales calculées. Cette évolution peut être assimilée à une spirale se développant autour de la position initiale et dont le rayon varie de 0 à 2 pixels. Le résultat de chaque opération est pesé selon une méthode dite de différenciation quadratique qui donne une valeur plus élevée aux pixels groupés qu'aux pixels isolés. Les coordonnées de l'élément ayant donné le résultat le plus faible sont stockées dans un tableau ainsi que le résultat associé.

Cette série d'opérations est répétée pour chaque élément de base du masque. A la fin de ce traitement on obtient un tableau de valeurs associées aux coordonnées idéales de chaque élément de base. Ce tableau sert de base à la détection et à la localisation des erreurs et des fraudes. Une erreur ou une fraude est détectée lorsque la valeur issue du traitement précédent dépasse le seuil d'erreur ou de fraude. Un marquage est alors appliqué sur la zone certifiée aux coordonnées associées à cette valeur. Le marquage consiste à apposer en surimpression une trame grise sur la zone certifiée. La densité de gris est fonction du type de détection: erreur = clair, fraude = foncé.

Cette comparaison pourra se faire entre la zone à certifier telle quelle et le masque étendu, ou de manière plus intéressante entre le masque restitué mais non étendu et l'image de la zone à certifier soumise à l'action du masque. Ceci permettra en effet d'éviter un traitement inverse sur le masque, qui est plus susceptible d'amener des erreurs que le traitement direct sur l'image de la zone à certifier.

Le résultat de cette comparaison déterminera des zones suspectes, dont le nombre et la localisation seront soumis à des critères d'identification automatique, dont il existe des nombreuses réalisations. Le plus simple consiste à déterminer des seuils en nombre et en étendue et à déclarer falsifiés les documents dont les erreurs dépassent ces seuils. Les plus élaborés consistent à utiliser des algorithmes de reconnaissance de forme pour tenter de reconnaître des indices de falsification.

Le résultat de ces comparaisons sera retransmis à l'émetteur avec l'accusé de réception. Il est également possible, mais nettement plus long, de retransmettre à l'émetteur la carte des défauts détectés.

## Revendications

1. Procédé de certification de la reproduction d'un document original, notamment d'une télécopie, dans lequel on analyse le document original ligne par ligne sous forme d'une trame, on élabore un sceau de certification (301) destiné à être imprimé dans un espace libre par exemple en bas de ladite reproduction, puis on reproduit le document par impression de la trame dans laquelle a été inséré ledit sceau, caractérisé en ce que ce sceau comprend au moins la transcription comprimée, et codée sous forme de codes-barres, du contenu d'une zone à certifier (103) du document original.

2. Procédé selon la revendication 1, caractérisé en ce que, pour obtenir cette transcription, on applique au signal obtenu lors de l'analyse de la zone à certifier un masque réducteur de résolution et on comprime à l'aide d'un algorithme de compression de données le signal provenant de cette réduction.

3. Procédé selon la revendication 2, caractérisé en ce que pour imprimer le sceau, on transcode le signal provenant de cette compression en codes-barres qui sont imprimés dans l'espace réservé au sceau selon un ensemble de lignes de codes-barres.

4. Procédé selon la revendication 3, caractérisé en ce que chaque ligne de codes-barres est imprimée sur une hauteur de n lignes d'analyse pour permettre une lecture non ambiguë de ces codes-barres dans les limites de distorsions de l'analyse.

5. Procédé selon la revendication 4, caractérisé en ce que chaque ligne de codes-barres est chiffrée par une somme-pour-contrôle horizontale (503), et en ce que la dernière ligne est formée d'une ligne de codes-barres constituant chacun une somme-pour-contrôle verticale.

6. Procédé selon l'une des revendications 3 à 5, caractérisé en ce que les codes-barres sont en outre imprimés sur m trames de codes-barres (401 - 404) distinctes, séparées et alignées dans le sens du balayage pour augmenter la tolérance aux distorsions de l'analyse.

7. Procédé selon l'une quelconque des revendications 2 à 6, caractérisé en ce que l'on applique en outre au signal provenant de la compression un algorithme de condensation qui détermine un signal numérique condensé, lequel est rajouté au signal provenant de la compression et permet de contrôler l'intégrité de celui-ci.

8. Procédé selon l'une quelconque des revendications 2 à 7, caractérisé en ce que l'on rajoute en outre au signal provenant de la compression un signal représentant des données d'identification.

9. Procédé selon la revendication 8, caractérisé en ce que ces données d'identification comprennent au moins la signature de l'émetteur, l'identification du récepteur, la date et l'heure de reproduction.

10. Procédé selon la revendication 9, caractérisé en ce que au moins les données d'identification sont chiffrées et que l'on rajoute en outre au signal la clé nécessaire au déchiffrement.

11. Procédé selon la revendication 10, caractérisé en ce que la totalité du signal représentant le sceau est chiffrée.

12. Procédé selon l'une quelconque des revendications 4 et 6, caractérisé en ce que n = m = 4.

13. Procédé selon l'une quelconque des revendications 1 à 12, caractérisé en ce que pour certifier le document, on rétabli à partir du sceau l'image de ladite zone déterminée (103) et que l'on compare cette image et cette zone.

14. Procédé selon la revendication 13, caractérisé en ce que cette comparaison est visuelle.

15. Procédé selon la revendication 13, caractérisé en ce que cette comparaison est automatique et que l'on effectue une réémission vers l'émetteur d'un signal de certification, ou de rejet de certification, selon les résultats de la comparaison.

16. Procédé selon l'une quelconque des revendications 10, 11, 13 à 15, caractérisé en ce que l'on obtient le chiffrement à partir d'un algorithme contenu dans une carte à puce.

## Patentansprüche

1. Verfahren zur Beglaubigung der Reproduktion eines Originaldokuments, insbesondere einer Telekopfe, bei dem das Originaldokument Linie für Linie in Form eines Rasters analysiert wird, ein Beglaubigungssiegel (301) ausgearbeitet wird, das dazu bestimmt ist, in einen freien Raum, beispielsweise unten in der Reproduktion, gedruckt zu werden, danach das Dokument reproduziert wird durch Drucken des Rasters, in welches das Siegel eingefügt wurde, dadurch gekennzeichnet, daß das Siegel mindestens die komprimierte und im Form von Barcodes kodierte Abschrift des Inhalts einer Beglaubigungszone (103) des Originaldokuments umfaßt.

2. Verfahren nach Anspruch 1, dadurch gekennzeichnet, daß um die Abschrift zu erhalten, auf das Signal, welches bei der Analyse der Beglaubigungszone erhalten wird, eine die Auflöesung verringernde Maske angewendet wird, und mit Hilfe eines Datenkompressions-Algorithmus das sich aus dieser Reduktion ergebende Signal komprimiert wird.

3. Verfahren nach Anspruch 2, dadurch gekennzeichnet, daß man zum Drucken des Siegels das sich aus der Kompression ergebende Signal in Barcodes umkodiert, die in den für das Siegel reservierten Raum gedruckt werden, gemäß einem Ensemble von Barcode-Linien.

4. Verfahren nach Anspruch 3, dadurch gekennzeichnet, daß jede Barcode-Linie auf eine Höhe von n Analyselinien gedruckt wird, um ein unzweideutiges Lesen dieser Barcodes innerhalb der Schranken der Analyseverzerrungen zu gestatten.

5. Verfahren nach Anspruch 4, dadurch gekennzeichnet, daß jede Barcode-Linie verschlüsselt ist durch eine horizontale Kontrollsumme (503), und dadurch, daß die letzte Linie gebildet ist aus einer Barcode-Linie, die jede eine vertikale Kontrollsumme bildet.

6. Verfahren nach einem der Ansprüche 3 bis 5, dadurch gekennzeichnet, daß die Barcodes außerdem auf m unterschiedliche Barcode-Raster (401-404) gedruckt werden, getrennt und ausgerichtet in der Abtastrichtung zur Erhöhung der Toleranz gegenüber Analyseverzerrungen.

7. Verfahren nach irgendeinem der Ansprüche 2 bis 6, dadurch gekennzeichnet, daß man außerdem auf das sich aus der Kompression ergebende Signal einen Kondensationsalgorithmus anwendet, der ein kondensiertes numerisches Signal bestimmt, welches dem Signal, das sich aus der Kompression ergibt, hinzugefügt wird und es gestattet, es in der Integrität zu kontrollieren.

8. Verfahren nach irgendeinem der Ansprüche 2 bis 7, dadurch gekennzeichnet, daß man dem Signal, welches sich aus der Kompression ergibt, außerdem ein Signal hinzufügt, welches der Identifikationsdaten entspricht.

9. Verfahren nach Anspruch 8, dadurch gekennzeichnet, daß die Identifikationsdaten mindestens die Signatur des Senders, die Identifikation des Empfängers, das Datum und die Stunde der Reproduktion umfassen.

10. Verfahren nach Anspruch 9, dadurch gekennzeichnet, daß zumindest die Identifikationsdaten verschlüsselt sind, und daß man außerdem dem Signal den für die Entschlüsselung notwendigen Schlüssel hinzufügt.

11. Verfahren nach Anspruch 10, dadurch gekennzeichnet, daß die Gesamtheit des das Siegel darstellenden Signals verschlüsselt ist.

12. Verfahren nach irgendeinem der Ansprüche 4 und 6, dadurch gekennzeichnet, daß n=m=4.

13. Verfahren nach irgendeinem der Ansprüche 1 bis 12, dadurch gekennzeichnet, daß zur Beglaubigung des Dokuments ausgehend vom Siegel das Bild der bestimmten Zone (103) wiederhergestellt wird, und daß dieses Bild und diese Zone miteinander verglichen werden.

14. Verfahren nach Anspruch 13, dadurch gekennzeichnet, daß dieser Vergleich visuell ist.

15. Verfahren nach Anspruch 13, dadurch gekennzeichnet, daß dieser Vergleich automatisch ist, und daß eine Wiederaussendung eines Beglaubigungssignals oder Beglaubigungsverweigerungssignals zum Sender durchgeführt wird, gemäß dem Resultaten des Vergleichs.

16. Verfahren nach irgendeinem der Ansprüche 10, 11, 13 bis 15, dadurch gekennzeichnet, daß man die Verschlüsselung ausgehend Von einem Algorithmus erhält, der in einer Chipkarte enthalten ist.

## Claims

1. Process for authentication of the reproduction of an original document, in particular of a facsimile, in which the original document is scanned line by line in the form of a raster, an authentication stamp (301) is prepared intended for printing in a free space at the bottom of said reproduction for example, then the document is reproduced by printing the raster in which said stamp was inserted, characterised in that this stamp comprises at least the compressed transcription, coded in the form of bar codes, of the contents of a zone to be authenticated (103) on the original document.

2. Process according to claim 1, characterised in that, to obtain this transcription, a resolution reduction mask is applied to the signal obtained during scanning of the zone to be authenticated, and the signal from this reduction is compressed with the aid of a data compression algorithm.

3. Process according to claim 2, characterised in that, to print the stamp, the signal from this compression is transcoded into bar codes which are printed in the space reserved for the stamp as a set of lines of bar codes.

4. Process according to claim 3, characterised in that each line of bar codes in printed over height of n scanning lines to allow unambiguous reading of these bar codes within the scanning distortion limits.

5. Process according to claim 4, characterised in that each, line of bar codes is enciphered through a horizontal checksum (503), and in that the last line is formed of a line of bar codes each constituting a vertical checksum.

6. Process according to one of claims 3 to 5, characterised in that the bar codes are also printed over m distinct rasters of bar codes (401 - 404), separated and aligned in the direction of scanning to increase the tolerance to scanning distortions.

7. Process according to any one of claims 2 to 6, characterised in that in addition a condensing algorithm is applied to the signal from the compression, which algorithm determines a condensed digital signal which is added to the signal from the compression and makes it possible to check the integrity of the latter signal.

8. Process according to any one of claims 2 to 7, characterised in that in addition a signal representing identification data is added to the signal from the compression.

9. Process according to claim 8, characterised in that this identification data at least comprises the signature of the sender, the identification of the receiver, the date and the time of reproduction.

10. Process according to claim 9, characterised in that at least the identification data is enciphered and the key necessary for deciphering is additionally added to the signal.

11. Process according to claim 10, characterised in that the totality of the signal representing the stamp is anciphered.

12. Process according to any one of claims 4 and 6, characterised in that n = m = 4.

13. Process according to any one of claims 1 to 12, characterised in that to authenticate the document, the image of said determined zone (103) is reconstituted from the stamp and in that this image and this zone are compared.

14. Process according to claim 13, characterised in that this comparison is visual.

15. Process according to claim 13, characterised in that this comparison is automatic and in that an authentication or authentication refusal signal is sent back to the sender depending on the results of the comparison.

16. Process according to any one of claims 10, 11, 13 to 15, characterised in that the enciphering is obtained from an algorithm contained in a smart card with a chip.
